# NEUE EUROPÄISCHE PATENTSCHRIFT

(11) **EP 1 576 326 B2**
(45) Veröffentlichungstag und Bekanntmachung des Hinweises auf die Entscheidung über den Einspruch: **28.04.2021**
(45) Hinweis auf die Patenterteilung: 19.07.2017
(21) Anmeldenummer: 03767742.4
(22) Anmeldetag: 04.12.2003
(51) Int. Cl.: F25D 23/02

(54) **KÄLTEGERÄT**
REFRIGERATOR
APPAREIL FRIGORIFIQUE

(30) Priorität: 19.12.2002 DE 10259749
(43) Veröffentlichungstag der Anmeldung: 21.09.2005
(60) Teilanmeldung: 17167950.9
(73) Patentinhaber: BSH Hausgeräte GmbH, 81739 München (DE)
(72) Erfinder: BAUER, Peter, 81827 München (DE); BECKE, Christoph, 83109 Grosskarolinenfeld (DE); GÖRZ, Alexander, 73432 Aalen-Ebnat (DE); JANSSEN, Hans-Reinhart, 89537 Giengen (DE); SPILLER, Ralf, 89537 Giengen (DE)
(86) Internationale Anmeldenummer: PCT/EP2003/013720
(87) Internationale Veröffentlichungsnummer: WO 2004/057250

(56) Entgegenhaltungen:
- DE-U1- 7 703 900
- DE-U1- 8 226 296
- DE-U1- 8 912 275
- FR-A1- 2 380 004
- GB-A- 699 006
- JP-A- 48 032 348
- JP-A- H04 174 281
- JP-A- H11 351 734
- JP-A- S50 107 555
- JP-U- S 559 331
- JP-U- S5 357 369
- JP-U- S5 554 878
- JP-U- S5 556 386
- JP-U- S6 416 588
- SE-C2- 514 746
- US-A- 1 711 381
- US-A- 2 294 686
- US-A- 2 341 924
- US-A- 2 477 055
- US-A- 2 596 706
- US-A- 3 314 196
- US-A- 5 704 107
- US-A1- 2001 035 024
- PATENT ABSTRACTS OF JAPAN vol. 2000, no. 03, 30. März 2000 (2000-03-30) -& JP 11 351734 A (SHOWA ALUM CORP), 24. Dezember 1999 (1999-12-24)
- PATENT ABSTRACTS OF JAPAN vol. 1998, no. 05, 30. April 1998 (1998-04-30) -& JP 10 009761 A (HITACHI LTD), 16. Januar 1998 (1998-01-16)
- PATENT ABSTRACTS OF JAPAN vol. 1996, no. 09, 30. September 1996 (1996-09-30) -& JP 08 121946 A (HITACHI LTD), 17. Mai 1996 (1996-05-17)
- PATENT ABSTRACTS OF JAPAN vol. 017, no. 312 (M-1429), 15. Juni 1993 (1993-06-15) -& JP 05 026569 A (MATSUSHITA REFRIG CO LTD), 2. Februar 1993 (1993-02-02)
- Auszug aus dem DPMA-Register: Designnummern des Designs 40108322.5
- Auszug aus dem DPMA-Register:bibliografische Daten zu dem Design 40108322.5

## Beschreibung

Die vorliegende Erfindung betrifft ein Kältegerät. Die Türen von Kältegeräten sind herkömmlicherweise aufgebaut aus einer Außenwand, üblicherweise einem Blech, das in einer der Höhe der herzustellenden Tür entsprechenden Länge von einer Rolle abgeschnitten und anschließend an mehreren Stellen gebogen wird, um jeweils die Frontplatte der Tür, seitlich an die Längsränder der Frontplatte anschließende Schenkel und an die Schenkel anschließende, nach innen gebogene Laschen zu bilden, und einer Innenwand, die durch Tiefziehen aus Kunststoff-Flachmaterial geformt und an den Laschen der Außenwand befestigt wird. Der zwischen Außen- und Innenwand gebildete Hohlraum wird mit einem oberen und einem unteren Abschlusselement verschlossen, das jeweils an den Querrändern von Innen- und Außenwand befestigt wird, und mit einem isolierenden Schaummaterial ausgefüllt.

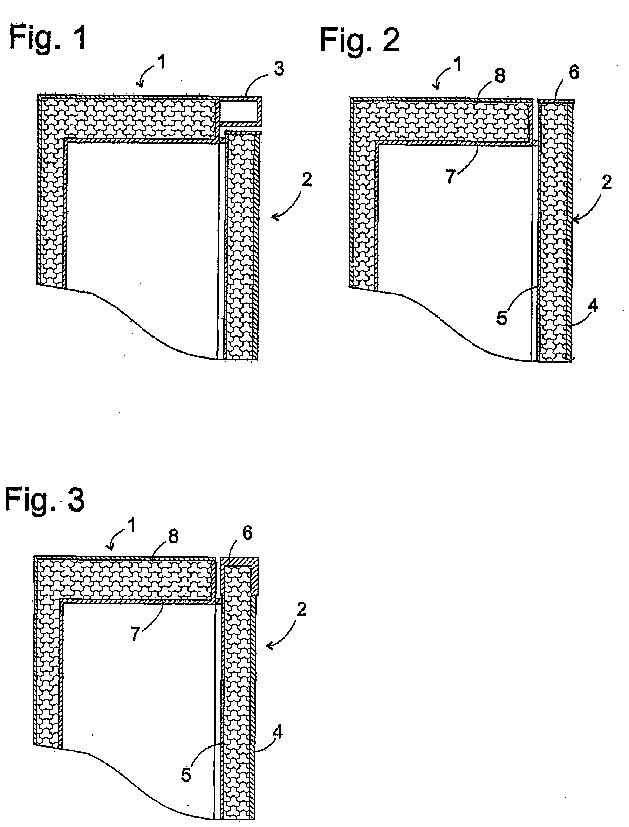

Fig. 1 zeigt einen schematischen Teilschnitt durch ein erstes Beispiel eines herkömmlichen, mit einer solchen Tür ausgestatteten Kältegerätes. Der Korpus 1 des Kältegerätes, an den die Tür 2 angeschlagen ist, erstreckt sich nach oben über den oberen Rand der Tür hinaus, und eine Bedienblende 3 ist oberhalb der Tür 2 am Korpus 1 montiert. Die Bedienblende dient dazu, Schalter, Tasten oder andere Bedienelemente zum Einstellen eines Betriebszustandes des Kältegerätes sowie Anzeigeelemente, die über Betriebsparameter des Kältegerätes Auskunft geben, in einer für den Benutzer gut zugänglichen Position unterzubringen.

Um den Geschmack möglichst weiter Abnehmerkreise befriedigen zu können, ist es für die Hersteller von Kältegeräten wünschenswert, Kältegeräte mit unterschiedlichen Erscheinungsbildern anbieten zu können, wobei der Tür als dem auffälligsten Teil des Kältegerätes eine besondere Bedeutung zukommt. Eine solche Möglichkeit, das Erscheindungsbild abzuwandeln, ist, die Tür so zu vergrößern, dass sie den Korpus des Kältegerätes in seiner gesamten Höhe, einschließlich eines eventuell daran angebrachten Bedienfeldes abdeckt. Eine denkbare Lösung dieses Problems ist in Fig. 2 skizziert. Bei einem bekannten Kältegerät sind Außenwand 4 und Innenwand 5 der Tür 2 bis in Höhe der Oberkante des Korpus 1 verlängert und dort durch ein Abschlusselement 6 abgedeckt. Diese Lösung ist aus mehreren Gründen unbefriedigend. Da für die Bedienblende kein Platz mehr ist, müssen die Bedienelemente entweder unmittelbar am vorderen Rand des Korpus 1 an der Stelle montiert werden, der bei dem Kältegerät aus Fig. 1 die Bedienblende getragen hat, was problematisch ist, da in diesem Bereich Innenbehälter 7 und Außenwand 8 des Korpus 1 aneinandergrenzen, oder es muss ein völlig anderer Ort für die Bedienelemente gewählt werden, was umfangreiche Konstruktionsänderungen gegenüber dem Kältegerät aus Fig. 1 erfordert und dementsprechend kostspielig ist. Außerdem macht es die Verlängerung der Innenwand 5 unmöglich, diese mit den gleichen Tiefziehwerkzeugen wie die Innenwand der Tür aus Fig. 1 herzustellen, was die parallele Fertigung von Kältegeräten gemäß Fig. 1 und Fig. 2 erheblich verteuert.

Fig. 3 zeigt eine andere bekannte Bauform eines Kältegerätegehäuses in einem schematischen Schnitt analog den der Figuren 1 und 2. Dieses Gehäuse unterscheidet sich von dem der Fig. 1 dadurch, dass die Bedienblende 3 weggelassen ist und statt dessen das Abschlusselement 6, das die oberen Querränder von Außen- und Innenwand 4, 5 der Tür 2 miteinander verbindet, stark verbreitert ist, so dass es mit der Oberkante des Korpus 1 abschließt. Diese Lösung hat den Vorteil, dass sie einfach und preiswert realisierbar ist, da Korpus und Innen- und Außenwand der Tür mit denen des Gerätes aus Fig. 1 identisch sein können und die Unterschiede sich im Wesentlichen auf die Bedienblende 3 und das Abschlusselement 6 beschränken. Der breite Streifen, den das verbreiterte Abschlusselement 6 am oberen Rand der Tür 2 einnimmt, gibt dem Gerät der Fig. 3 jedoch eine große Ähnlichkeit mit dem aus Fig. 1.

Dokument JP S53 57369 U offenbart eine Gerätetür mit einer Außenwand an der ein Bedien- und Anzeigefeld angebracht ist.

Dokument US 2 477 055 A lehrt ein Bedien- und/oder Anzeigefeld an einem Korpus anzuordnen und dieses Bedien- und/oder Anzeigefeld durch eine Tür zu verdecken. Aufgabe der Erfindung ist, ein Kältegerät zu schaffen, die diesem ein Erscheinungsbild verleiht, das sich deutlich von dem des Gerätes aus Fig. 1 unterscheidet, und das dennoch weitgehend aus gleichen Einzelteilen wie das Gerät aus Fig. 1 zusammengebaut werden kann bzw. bei dem die unvermeidlicherweise zu verändernden Teile preiswert realisierbar sind. Die Aufgabe wird gelöst durch ein Kältegerät mit den Merkmalen des Anspruchs 1. Die Erfindung ermöglicht es, ein Kältegerät, dessen Korpus dem des Gerätes aus Fig. 1 entspricht, auf seiner gesamten Höhe durch eine Tür mit kontinuierlicher Außenfläche abzudecken. Ein auffälliger Abschluss wie etwa durch die sichtbare Bedienblende 3 des Gerätes aus Fig. 1 oder das verbreiterte Abschlusselement 6 des Gerätes aus Fig. 3 entfällt. Dennoch ist die Tür sehr preiswert realisierbar, da ihre Innenwand mit der des Gerätes aus Fig. 1 identisch sein kann. Die Herstellung der gegenüber Fig. 1 verlängerten Außenwand erfordert nur einen minimalen Mehraufwand, da es genügt, das Blech, aus dem die Außenwand gebildet wird, in einer etwas veränderten Länge abzuschneiden, und die Schritte des Biegens des Bleches unabhängig von dessen Länge die gleichen sind. Außerdem ist es in der Fertigung auch jetzt schon gebräuchlich, Bleche für die Außenwand der Tür in unterschiedlichen Längen zuzuschneiden und zu verarbeiten, da Kältegeräte im Allgemeinen in einer Mehrzahl von Modellen unterschiedlicher Größe hergestellt werden, die sich lediglich durch die Höhe der Tür, nicht aber durch deren Breite, unterscheiden. Das erste Abschlußelement überbrückt demnach durch seine Gestaltung die Höhendifferenz zwischen Türinnenwand und Türaußenwand. Die an der Türinnenwand vorgesehene Befestigungsposition und Befestigungsart für eine Türdichtung kann analog zu der in Fig. 1 dargestellten angeordnet bzw. ausgebildet sein.

Durch die Erfindung können ausgehend von einem Gerätegehäuse durch die Montage unterschiedlicher Türen, nämlich einer Tür bei der Innenwand und Außenwand im wesentlichen gleiche Höhe aufweisen oder einer Tür, bei der die Innenwand gegenüber der Außenwand verkürzt ist, Geräte mit unterschiedlichem Erscheinungsbild, nämlich mit bei geschlossener Tür abgedeckten oder frei zugänglichen Bedien- und/ oder Anzeigeelementen erzeugt werden.

Vorzugsweise hat das erste Abschlusselement einen gestuften Querschnitt mit einem am Querrand der Außenwand befestigten Abschnitt, einem am Querrand der Innenwand befestigten Abschnitt und einer die Abschnitte verbindenden, den Längenunterschied von Innen- und Außenwand ausgleichenden Flanke. Der durch die stufenartige Ausbringung geschaffene Freiraum erlaubt es, bei einem mit einer erfindungsgemäßen Tür ausgestatteten Kältegerät eine Bedienblende am Korpus zu montieren, die sich lediglich in ihrer Tiefe geringfügig von der Bedienblende der Fig. 1 unterscheiden muss.

Besonders rasch und kostengünstig angepasst kann das erste Abschlusselement auf unterschiedliche Längenunterschiede zwischen Innen- und Außenwand werden, wenn vorteilhafter Weise vorgesehen ist, dass die Flanke in ihrer Höhe variabel einstellbar ist.

Um eine Bedienblende mit vertikaler Vorderfront anbringen zu können, ist es wünschenswert, dass die Flanke zu Vorder- und Rückseite der Tür parallel ist. Außerdem sollte die Höhe der Flanke bzw. der Längenunterschied zwischen Außen- und Innenwand wenigstens 2 cm betragen, um eine ausreichend große Bedienblende unterbringen zu können.

Ein zweites Abschlusselement, das einen dem ersten Abschlusselement gegenüberliegenden Abschluss des Zwischenraumes bildet, ist vorzugsweise in herkömmlicher Weise an miteinander bündigen zweiten Querrändern von Außen- und Innenwand befestigt. Dieses zweite Abschlusselement kann somit mit einem Abschlusselement identisch sein, das auch zur Fertigung einer Tür gemäß Fig. 1 eingesetzt wird. Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: einen schematischen Teilschnitt durch ein herkömmliches Kältegerätegehäuse;
- Fig. 2: einen schematischen Schnitt durch eine mögliche Abwandlung des Gehäuses aus Fig. 1;
- Fig. 3: einen Schnitt durch ein weiteres herkömmliches Gehäuse;
- Fig. 4: einen Schnitt durch ein Kältegerätegehäuse gemäß einer ersten Ausgestaltung der Erfindung;
- Fig. 5: einen horizontalen Schnitt durch die Tür des Kältegerätes; und
- Fig. 6: einen Schnitt durch ein Kältegerät gemäß einer zweiten Ausgestaltung der Erfindung.

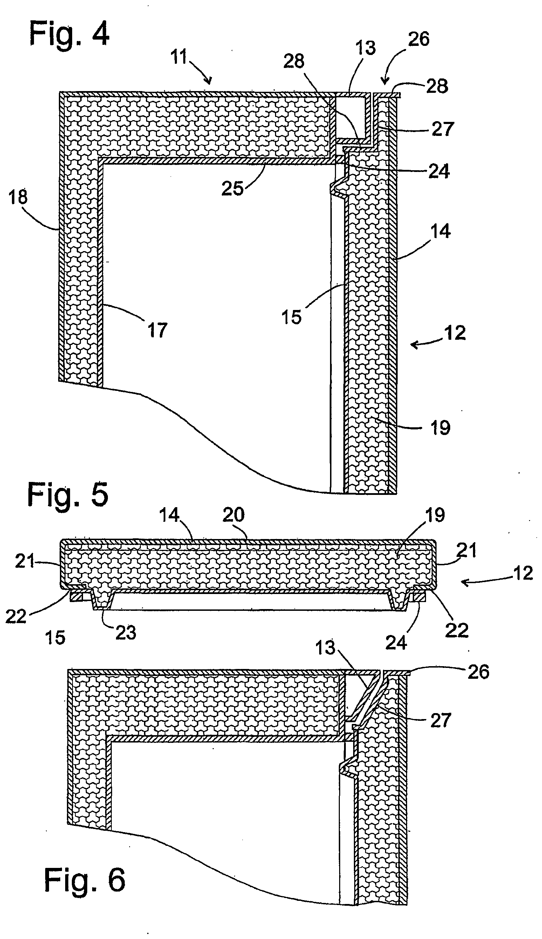

Fig. 4 zeigt einen vertikalen Schnitt durch den oberen Bereich des Korpus 11 und der Tür 12 eines erfindungsgemäßen Kältegerätes. Der Korpus hat einen an sich bekannten mehrschichtigen Aufbau mit einer Außenwand 18 aus Blech und einem Innenbehälter 17 aus Kunststoff, die einen mit Isolierschaum ausgefüllten Zwischenraum begrenzen und im Bereich einer Vorderseite des Korpus 11, an die auch die Tür angeschlagen ist, aneinandergrenzen. Entlang der oberen Kante des Korpus 11 ist der Grenzbereich zwischen Innenbehälter 17 und Außenwand 18 durch eine schematisch dargestellte Bedienblende 13 aus Kunststoff verdeckt, in der Bedien- und Anzeigeelemente zum Beeinflussen bzw. Anzeigen des Betriebszustandes des Kältegerätes (nicht dargestellt) angeordnet sind.

Fig. 5 zeigt einen horizontalen Schnitt durch die an den Korpus 11 angeschlagene Tür 12. Eine Außenwand 14 aus Blech und eine aus Kunststoff tiefgezogene Innenwand 15 begrenzen einen mit isolierendem Schaumstoff ausgefüllten Zwischenraum 19. Das Blech ist mehrfach in Längsrichtung gebogen, um eine Frontplatte 20, zwei seitliche Schenkel 21 und Befestigungslaschen 22 zu bilden, welche Längsränder des Bleches darstellen, an denen die Innenwand 15 befestigt ist. An der Innenwand 15 ist durch Tiefziehen ein umlaufender Rahmen geformt, dessen vorspringende vertikale Stege 23 zur Versteifung und eventuell zur Befestigung von (nicht dargestellten) Türabstellern dienen. Entlang des äußeren Randes der Innenwand 15 erstreckt sich eine umlaufende Dichtung 24.

Wie in Fig. 4 zu erkennen ist, reicht die Innenwand 15 nicht wesentlich weiter nach oben über die Decke 25 des Innenbehälters 17 hinaus, wie erforderlich, um die umlaufende Dichtung 24, die bei geschlossener Tür 12 an einem vorderen Rand des Innenbehälters 17 bzw. an Abwinkungen der seitlichen Ränder der Außenwand 18 anliegt, auf der Innenwand 15 montieren zu können. Die Außenwand 14 der Tür hingegen reicht nach oben über die Innenwand 15 hinaus, so dass sie den Korpus 11 praktisch vollständig verdeckt.

Die Höhendifferenz zwischen Innenwand 14 und Außenwand 15 wird ausgeglichen durch ein aus Kunststoff gespritztes Abschlusselement 26, das zwei durch eine vertikale Flanke 27 verbundene horizontale Abschnitte 28 aufweist, von denen einer mit dem oberen Querrand der Außenwand 14 und der andere mit dem der Innenwand 15 verbunden ist und die Querränder dicht gegen das aufschäumende Wärmeisolationsmaterial umfasst.

Zur Stabilisierung der Befestigung des Abschlusselementes 26 an den Wänden der Tür weist das Abschlusselement 26 (in der Fig. nicht gezeigte) in den Zwischenraum 19 eingreifende und jeweils an einer Rückseite einer der Wände 14, 15 anliegende Stege oder Vorsprünge auf, die an den Wänden 14, 15 verklebt sind. Auch durch die adhäsive Wirkung des Wärmeisolationsmaterials werden die Abschlusselemente zusammen mit der Innen- und Außenwand zu einem formsteifen Gebilde verbunden.

In die durch den unteren horizontalen Abschnitt 28 und die Flanke 27 begrenzte Aussparung ist die Bedienblende 13 eingepasst. Im in Fig. 4 gezeigten Zustand ist die Bedienblende 13 durch die Tür 12 vollständig verdeckt; bei geöffneter Tür ist sie frei sichtbar und zugänglich.

Am in Fig. 4 nicht gezeigten unteren Rand ist der Zwischenraum 19 der Tür 12 durch ein zweites Abschlusselement verschlossen. Da die Ränder der Wände 14, 15 an ihrem unteren Rand der Tür 12 bündig sind, hat dieses zweite Abschlusselement die Gestalt des Abschlusselementes 6 aus Fig. 1. Um das in Fig. 4 gezeigte Kältegerät zu bauen, werden lediglich drei Teile benötigt, die sich von den entsprechenden Teilen des Kältegerätes der Fig. 1 unterscheiden: die Bedienblende, deren Tiefe bei dem Kältegerät gemäß der Erfindung geringfügig reduziert ist, das Abschlusselement 26 und die geringfügig verlängerte Außenwand 14 der Tür. Alle anderen Teile können identisch für beide Typen von Kältegerät verwendet werden.

Fig. 6 zeigt eine Abwandlung des Kältegerätes aus Fig. 4, die sich insbesondere für Geräte mit großer Bauhöhe eignet. Bei dieser Abwandlung ist die Vorderseite der Bedienblende 13 nicht vertikal, sondern schräg, so dass sie für einen Benutzer, der vor ihr steht und zu ihr hochblicken muss, bequemer abzulesen und zu bedienen ist. Der Querschnitt des Abschlusselementes 26 ist an die modifizierte Bedienblende angepasst, indem parallel zu deren Vorderseite auch die Flanke 27 schräg orientiert ist.

## Patentansprüche

1. Kältegerät mit einem Korpus (11) und mit einer an den Korpus (11) angeschlagenen Tür (12), die eine Außenwand (14) und eine Innenwand (15) aufweist, die entlang von Längsrändern miteinander verbunden sind, und einem an einem Querrand der Außenwand (14) und einem Querrand der Innenwand (15) befestigten ersten Abschlusselement (26), das zusammen mit der Außenwand (14) und der Innenwand (15) einen isolierenden Zwischenraum begrenzt, wobei die Innenwand (15) in Längsrichtung kürzer als die Außenwand (14) ausgebildet ist und dieser Längenunterschied zwischen der Innenwand (15) und der Außenwand (14) durch das erste Abschlußelement (26) überbrückt ist, wobei die Außenwand (14) derart über die Innenwand (15) nach oben hinaus reicht, dass sie den Korpus (11) praktisch vollständig verdeckt und dass sich entlang des äußeren Randes der Innenwand (15) eine umlaufende Dichtung (24) erstreckt, **dadurch gekennzeichnet, dass** ein Bedien- und/oder Anzeigefeld (13) am Korpus (11) in Höhe des ersten Abschlusselementes (26) angebracht ist.

2. Kältegerät nach Anspruch 1, **dadurch gekennzeichnet, dass** das erste Abschlusselement (26) einen gestuften Querschnitt mit einem am Querrand der Außenwand (14) befestigten Abschnitt (28), einem am Querrand der Innenwand (15) befestigten Abschnitt (28) und einer die Abschnitte (28) verbindenden, den Längenunterschied ausgleichenden Flanke (27) hat.

3. Kältegerät nach Anspruch 2, **dadurch gekennzeichnet, dass** durch den gestuften Querschnitt ein Freiraum zur Montage einer Bedienblende (13) am Korpus (11) geschaffen ist.

4. Kältegerät nach einem der Ansprüche 1 bis 3, **dadurch gekennzeichnet, dass** die Flanke (27) zur Vorderseite (20) und zur Rückseite der Tür (12) parallel ist.

5. Kältegerät nach einem der Ansprüche 1 bis 4, **dadurch gekennzeichnet, dass** die Höhe der den Längenunterschied ausgleichenden Flanke (27) wenigstens 2 cm beträgt.

6. Kältegerät nach einem der Ansprüche 1 bis 5, **dadurch gekennzeichnet, dass** das erste Abschlusselement (26) einen oberen Abschluss der Tür (12) bildet.

7. Kältegerät zumindest nach Anspruch 2, **dadurch gekennzeichnet, dass** in die durch den unteren horizontalen Abschnitt (28) und die Flanke (27) begrenzte Aussparung die Bedienblende (13) eingepasst ist.

8. Kältegerät nach einem der Ansprüche 1 bis 7, **dadurch gekennzeichnet, dass** die Bedienblende (13) bei geschlossener Tür (12) vollständig verdeckt und bei geöffneter Tür (12) frei sichtbar und zugänglich ist.

9. Kältegerät nach einem der Ansprüche 1 bis 8, **dadurch gekennzeichnet, dass** zur Stabilisierung der Befestigung des Abschlusselementes (26) an den Wänden (14, 15) der Tür (12) das Abschlusselement (26) in den Zwischenraum (19) eingreifende und jeweils an einer Rückseite einer der Wände (14, 15) anliegende Stege oder Vorsprünge aufweist, die an den Wänden (14, 15) verklebt sind.

10. Kältegerät nach Anspruch 1, **dadurch gekennzeichnet, dass** ein zweites Abschlusselement vorgesehen ist, das in herkömmlicher Weise an miteinander bündigen zweiten Querrändern der Außenwand (14) und der Innenwand (15) befestigt ist.

11. Kältegerät nach Anspruch 1, **dadurch gekennzeichnet, dass** das erste Abschlusselement (26) eine schräg orientierte Flanke (27) aufweist, die parallel zu einer schräg angeordneten Vorderseite der Bedienblende (13) angeordnet ist.

## Claims

1. Refrigerator having a carcass (11) and a door (12) fastened to the carcass (11), said door (12) having an outer wall (14) and an inner wall (15) which are interconnected along longitudinal edges, and a first closing element (26) which is attached to a transverse edge of the outer wall (14) and a transverse edge of the inner wall (15) and which together with the outer wall (14) and the inner wall (15) delimits an insulating intermediate space, wherein the inner wall (15) is designed to be shorter than the outer wall (14) in the longitudinal direction and said difference in length between the inner wall (15) and the outer wall (14) is bridged by the first closing element (26), wherein the outer wall (14) extends upwards over the inner wall (15) such that it practically completely covers the carcass (11) and that an all-round seal (24) extends along the outer edge of the inner wall (15), **characterised in that** a control and/or display panel (13) is fixed to the carcass (11) at the height of the first closing element (26).

2. Refrigerator according to claim 1, **characterised in that** the first closing element (26) has a stepped cross-section with one section (28) attached to the transverse edge of the outer wall (14), one section (28) attached to the transverse edge of the inner wall (15) and a flank (27) connecting the sections (28) and compensating for the difference in length.

3. Refrigerator according to claim 2, **characterised in that** because of the stepped cross-section a free space is created for mounting a control panel (13) on the carcass (11).

4. Refrigerator according to one of claims 1 to 3, **characterised in that** the flank (27) is parallel to the front (20) and the rear of the door (12).

5. Refrigerator according to one of claims 1 to 4, **characterised in that** the height of the flank (27) compensating for the difference in length is at least 2 cm.

6. Refrigerator according to one of claims 1 to 5, **characterised in that** the first closing element (26) forms an upper closure of the door (12).

7. Refrigerator at least according to claim 2, **characterised in that** the control panel (13) is fitted into the recess delimited by the lower horizontal section (28) and the flank (27).

8. Refrigerator according to one of claims 1 to 7, **characterised in that** the control panel (13) is completely covered when the door (12) is closed and is freely visible and accessible when the door (12) is open.

9. Refrigerator according to one of claims 1 to 8, **characterised in that** to stabilise the attachment of the closing element (26) to the walls (14, 15) of the door (12) the closing element (26) has webs or projections which are bonded to the walls (14, 15) and which engage in the intermediate space (19) and in each case abut a rear of one of the walls (14, 15).

10. Refrigerator according to claim 1, **characterised in that** a second closing element is provided, which is attached in a conventional manner to second transverse edges of the outer wall (14) and the inner wall (15) which are flush with each other.

11. Refrigerator according to claim 1, **characterised in that** the first closing element (26) has an obliquely oriented flank (27) which is arranged parallel to an obliquely arranged front of the control panel (13).

## Revendications

1. Appareil frigorifique comprenant un corps (11) et comprenant une porte (12) montée sur le corps (11) par charnières, laquelle présente une paroi extérieure (14) et une paroi intérieure (15), lesquelles sont reliées entre elles le long de bords longitudinaux, et comprenant un premier élément terminal (26) fixé sur un bord transversal de la paroi extérieure (14) et sur un bord transversal de la paroi intérieure (15), lequel élément terminal délimite, avec la paroi extérieure (14) et la paroi intérieure (15), un espace intermédiaire isolant, la paroi intérieure (15), dans le sens longitudinal, étant réalisée de manière plus courte que la paroi extérieure (14) et cette différence de longueur entre la paroi intérieure (15) et la paroi extérieure (14) étant surmontée au moyen du premier élément terminal (26), la paroi extérieure (14) allant vers le haut au-delà de la paroi intérieure (15) de manière à ce qu'elle recouvre le corps (11) pratiquement complètement et qu'un joint périphérique (24) s'étende le long du bord extérieur de la paroi intérieure (15), **caractérisé en ce qu'**un champ de commande et/ou d'affichage (13) est placé sur le corps (11) à hauteur du premier élément terminal (26).

2. Appareil frigorifique selon la revendication 1, **caractérisé en ce que** le premier élément terminal (26) a une section transversale en gradins avec une section (28) fixée sur le bord transversal de la paroi extérieure (14), une section (28) fixée sur le bord transversal de la paroi intérieure (15), et un flanc (27) reliant les sections (28), compensant la différence de longueur.

3. Appareil frigorifique selon la revendication 2, **caractérisé en ce qu'**en raison de la section transversale en gradins, un espace libre est créé sur le corps (11) pour le montage d'un bandeau de commande (13).

4. Appareil frigorifique selon l'une quelconque des revendications 1 à 3, **caractérisé en ce que** le flanc (27) est parallèle au côté avant (20) et au côté arrière de la porte (12).

5. Appareil frigorifique selon l'une quelconque des revendications 1 à 4, **caractérisé en ce que** la hauteur du flanc (27) compensant la différence de longueur est d'au moins 2 cm.

6. Appareil frigorifique selon l'une quelconque des revendications 1 à 5, **caractérisé en ce que** le premier élément terminal (26) forme une terminaison supérieure de la porte (12).

7. Appareil frigorifique au moins selon la revendication 2, **caractérisé en ce que** le bandeau de commande (13) est ajusté dans l'évidement limité par la section (28) inférieure horizontale et par le flanc (27).

8. Appareil frigorifique selon l'une quelconque des revendications 1 à 7, **caractérisé en ce que** le bandeau de commande (13) est complètement recouvert lorsque la porte (12) est fermée et **en ce qu'**il est librement visible et accessible lorsque la porte (12) est ouverte.

9. Appareil frigorifique selon l'une quelconque des revendications 1 à 8, **caractérisé en ce que** pour stabiliser la fixation de l'élément terminal (26) sur les parois (14, 15) de la porte (12), l'élément terminal (26) présente des nervures ou des saillies ayant prise dans l'espace intermédiaire (19) et respectivement adjacentes à un côté arrière de l'une des parois (14, 15), lesquelles sont collées sur les parois (14, 15).

10. Appareil frigorifique selon la revendication 1, **caractérisé en ce qu'**un deuxième élément terminal est ménagé, qui est fixé de manière conventionnelle sur des deuxièmes bords transversaux, affleurant entre eux, de la paroi extérieure (14) et de la paroi intérieure (15).

11. Appareil frigorifique selon la revendication 1, **caractérisé en ce que** le premier élément terminal (26) présente un flanc (27) orienté de manière oblique, qui est disposé parallèlement à un côté avant, disposé de manière oblique, du bandeau de commande (13).
